# EUROPÄISCHE PATENTSCHRIFT

(11) **EP 1 781 448 B1**
(45) Veröffentlichungstag und Bekanntmachung des Hinweises auf die Patenterteilung: **05.03.2008**
(21) Anmeldenummer: 05774988.9
(22) Anmeldetag: 05.08.2005
(51) Int. Cl.: B23Q 11/00, B21H 3/06

(54) **KALTWALZMASCHINE UND VERFAHREN ZUR REINIGUNG VON WERKZEUGMASCHINENBEREICHEN**
COLD-ROLLING MACHINE AND METHOD FOR CLEANING MACHINE TOOL ZONES
MACHINE DE LAMINAGE A FROID ET PROCEDE DE NETTOYAGE DE ZONES DE MACHINES-OUTILS

(30) Priorität: 17.08.2004 DE 102004041022
(43) Veröffentlichungstag der Anmeldung: 09.05.2007
(73) Patentinhaber: Ex-Cell-O GmbH, 73054 Eislingen (DE)
(72) Erfinder: HOFMANN, Gerhard, 72475 Bitz (DE); BÖHLER, Harald, 70771 Echterdingen (DE); PIKISCH, Johannes, 73054 Eislingen (DE); STANIK, Markus, 73095 Albershausen (DE)
(74) Vertreter: Regelmann, Thomas
(86) Internationale Anmeldenummer: PCT/EP2005/008545
(87) Internationale Veröffentlichungsnummer: WO 2006/018165

(56) Entgegenhaltungen:
- EP-A- 1 295 677
- WO-A-98/52715
- CH-A5- 615 105
- DE-A1- 3 109 974
- DE-A1- 10 151 725
- DE-A1- 19 632 633
- DE-A1- 19 961 225
- US-A- 3 824 646
- US-A- 5 197 837
- PATENT ABSTRACTS OF JAPAN Bd. 010, Nr. 211 (M-501), 24. Juli 1986 (1986-07-24) & JP 61 050738 A (YAMAZAKI MAZAK CORP), 13. März 1986 (1986-03-13)
- PATENT ABSTRACTS OF JAPAN Bd. 009, Nr. 158 (M-393), 3. Juli 1985 (1985-07-03) & JP 60 033828 A (AMADA:KK), 21. Februar 1985 (1985-02-21)

## Beschreibung

Die Erfindung betrifft eine Kaltwalzmaschine mit einem ersten Walzstangenhalter, einem zweiten Walzstangenhalter und einem zwischen den Walzstangenhaltern angeordneten Werkstückhalter.

Weiterhin betrifft die Erfindung ein Verfahren zur Reinigung von Werkzeugmaschinenbereichen einer Werkzeugmaschine mit mindestens einer beweglichen Funktionseinrichtung, wobei die mindestens eine Reinigungseinrichtung so ausgebildet und angeordnet wird, daß durch Bewegung der mindestens einen Funktionseinrichtung ein Reinigungsvorgang durchgeführt wird.

Werkzeugmaschinen mit mindestens einer beweglichen Funktionseinrichtung sind beispielsweise in der EP 0 614 724 B1 oder der WO 01/94048 A1 offenbart. Unter einer Funktionseinrichtung wird dabei eine Maschineneinrichtung verstanden, welche die Funktion der Werkzeugmaschine gewährleistet. Beispielsweise handelt es sich bei der Funktionseinrichtung um einen Werkstückhalter oder einen Werkzeughalter.

Bei dem Bearbeitungszentrum der EP 0 614 724 B1 stellt beispielsweise ein Werkstückhalter eine bewegliche Funktionseinrichtung dar.

Bei der Kaltwalzmaschine der WO 01/94048 A1 stellen Walzstangenhalter und Werkstückhalter bewegliche Funktionseinrichtungen dar.

Aus der DE 196 32 633 A1 ist eine Vorrichtung zur Kaltumformung im Umfangsbereich eines zylindrischen Metall-Werkstückes bekannt, bei dem bewegten Kaltformwerkzeugen ihrem jeweiligen Einwirkungsbereich auf das Werkstück ein Schmier-/Gleitmittel zugeführt wird. Walzzähne der Walzbacken werden mittels bewegter Bürsten mechanisch gereinigt, wobei eine entsprechende Bürstenvorrichtung einen Druckluftmotor mit einem Winkelgetriebe zum Antrieb einer Walzenbürste umfaßt und die Bürstenvorrichtung mit einer einen gesteuerten Bürsteneingriff ermöglichte Absenk- und Hebeeinrichtung kombiniert ist.

Der Erfindung liegt die Aufgabe zugrunde, eine Kaltwalzmaschine der eingangs genannten Art so zu verbessern, daß diese auf einfache Weise gewartet ' werden kann.

Diese Aufgabe wird erfindungsgemäß dadurch gelöst, daß in dem Werkstückhalter mindestens eine Reinigungseinrichtung sitzt, wobei Walzstangen über die Walzstangenhalter relativ zu der mindestens einen Reinigungseinrichtung zur Reinigung der Walzstangen verfahrbar sind.

Walzstangen, welche an der Kaltwalzmaschine angeordnet sind, stellen (bewegliche) Werkzeugmaschinenbereiche dar. Wenn die Walzstangen relativ zu der mindestens einen Reinigungseinrichtung verfahren werden, dann läßt sich eine Wirkfläche dieser Walzstangen reinigen. Dieser Reinigungsvorgang läßt sich automatisiert durchführen.

Ein Bedienereingriff ist dann nicht notwendig. Es ist dabei auch grundsätzlich möglich, daß die mindestens eine Reinigungseinrichtung automatisch in dem Werkstückhalter fixiert wird.

Die mindestens eine Reinigungseinrichtung ist vorteilhafterweise drehbar in dem Werkstückhalter angeordnet. Die Drehbarkeit kann aufgrund einer relativen Drehbarkeit zu dem Werkstückhalter zustande kommen oder durch eine insbesondere angetriebene Drehbarkeit des Werkstückhalters. Bei einer angetriebenen Drehung der mindestens einen Reinigungseinrichtung läßt sich die Reinigungswirkung verbessern.

Diese Aufgabe wird bei der eingangs genannten Werkzeugmaschine erfindungsgemäß dadurch gelöst, daß mindestens eine Reinigungseinrichtung vorgesehen ist, welche so angeordnet und ausgebildet ist, daß mit einer Bewegung der mindestens einen Funktionseinrichtung ein Reinigungsvorgang durchführbar ist.

Erfindungsgemäß wird die sowieso vorhandene bewegliche Funktionseinrichtung dazu genutzt, einen Reinigungsvorgang und insbesondere eine Reinigungsbewegung durchzuführen. Dadurch läßt sich ein insbesondere automatisierter Reinigungsvorgang durchführen. Dies ermöglicht es, Stillstandszeiten aufgrund einer notwendigen Arbeitsraumreinigung zu reduzieren.

Günstig ist es, wenn die mindestens eine Reinigungseinrichtung in Relation zu der Funktionseinrichtung so angeordnet und ausgebildet ist, daß durch die Bewegung der Funktionseinrichtung Bearbeitungsrückstände wie Späne, Stäube, Kühlmittel, Schmiermittel oder Niederschläge einer Abführung zuführbar sind.

Bei entsprechender Ausbildung der mindestens einen Reinigungseinrichtung in Relation zur Funktionseinrichtung läßt es sich mit der Bewegung der Funktionseinrichtung erreichen, daß mindestens ein Teil von in einem Arbeitsraum anfallenden Bearbeitungsrückständen der Abführung zugeführt werden und damit entsorgt werden. Es lassen sich dadurch beispielsweise Stillstandszeiten zur Arbeitsraumreinigung verringern.

Insbesondere weist die mindestens eine Reinigungseinrichtung einen Abstreifer und/oder eine Bürste auf. Es läßt sich dann ein Werkzeugmaschinenbereich mit dem Abstreifer oder der Bürste beaufschlagen. Es lassen sich dadurch Bearbeitungsrückstände abstreifen bzw. abbürsten, um diesen entsprechenden Werkzeugmaschinenbereich zu reinigen. Eine solche Reinigungseinrichtung läßt sich auf einfache und kostengünstige Weise herstellen.

Es kann vorgesehen sein, daß die mindestens eine Funktionseinrichtung in mindestens einer Linearrichtung beweglich ist. Beispielsweise ist die mindestens eine Funktionseinrichtung über einen linearbeweglichen Schlitten gebildet.

Es kann alternativ oder zusätzlich vorgesehen sein, daß die mindestens eine Funktionseinrichtung um mindestens eine Achse schwenkbar oder drehbar ist.

Es ist grundsätzlich möglich, daß der mindestens einen Funktionseinrichtung ein Antrieb zu deren Bewegung zugeordnet ist. Es läßt sich dann beispielsweise ein Reinigungsvorgang während eines Werkstückbearbeitungsbetriebs der Werkzeugmaschine durchführen, da für eine automatische Bewegung der mindestens einen Reinigungseinrichtung gesorgt ist bzw. für eine automatische Bewegung eines Werkzeugmaschinenbereichs relativ zu der mindestens einen Reinigungseinrichtung.

Es ist grundsätzlich auch möglich, daß die mindestens eine Funktionseinrichtung manuell-beweglich- ist. Beispielsweise kann eine Reinigungseinrichtung an einer Werkzeugmaschinentür wie einer Werkzeugwechseltür oder einer Bedienertür angeordnet sein. Wenn die Tür bewegt wird, läßt sich automatisch ein bestimmter Bereich der Werkzeugmaschine reinigen; beispielsweise werden bei der Bewegung der Tür Bearbeitungsrückstände in einem bestimmten Werkzeugmaschinenbereich abgestreift und/oder Bearbeitungsrückstände an der Tür abgestreift.

Bei der mindestens einen Funktionseinrichtung kann es sich auch um einen Werkstückhalter oder einen Werkzeughalter handeln. Diese sind jeweils beweglich, um ein Werkstück entsprechend den Vorgaben bearbeiten zu können.

Es ist auch möglich, daß die mindestens eine Funktionseinrichtung eine Tür ist, wie beispielsweise eine Bedienertür oder eine Werkzeugwechseltür.

Insbesondere ist die Tür an einem Maschinengehäuse angeordnet.

Besonders vorteilhaft läßt sich eine Reinigungseinrichtung im Zusammenhang mit einer verschieblichen Türe (Schiebetüre) einsetzen.

Es kann vorgesehen sein, daß die mindestens eine Reinigungseinrichtung dann so an der Tür angeordnet ist, daß bei Bewegen der Tür die mindestens eine Reinigungseinrichtung an einem zu reinigenden Werkzeugmaschinenbereich entlanggeführt ist. Beim Öffnen und Schließen der Türe läßt sich dieser Werkzeugmaschinenbereich automatisch reinigen.

Es ist alternativ oder zusätzlich möglich, daß die mindestens eine Reinigungseinrichtung so bezüglich der Tür angeordnet ist, daß bei Bewegung der Tür diese an der mindestens einen Reinigungseinrichtung entlanggeführt ist. Dadurch läßt sich die Tür oder zumindest ein Türbereich beim Öffnen und/oder Schließen der Tür reinigen.

Günstigerweise ist die mindestens eine Reinigungseinrichtung in einem Arbeitsraum der Werkzeugmaschine positioniert und dabei fest positioniert oder beweglich positioniert. Es läßt sich dadurch automatisiert ein entsprechender Werkzeugmaschinenbereich, welcher durch die mindestens eine Reinigungseinrichtung beaufschlagt ist, reinigen.

Es kann vorgesehen sein, daß die mindestens eine Reinigungseinrichtung an der mindestens einen Funktionseinrichtung sitzt und mit dieser beweglich ist. Beispielsweise wird die mindestens eine Reinigungseinrichtung mit einem Schlitten verfahren oder über einen Rundtisch gedreht. Durch die entsprechende Bewegung der mindestens einen Reinigungseinrichtung läßt sich eine Reinigungsbewegung an einem Werkzeugmaschinenbereich durchführen, welcher durch beispielsweise einen Abstreifer oder eine Bürste der mindestens einen Reinigungseinrichtung beaufschlagt ist.

Insbesondere ist dann die mindestens eine Reinigungseinrichtung so angeordnet und ausgebildet, daß sie bei der Bewegung der zugeordneten Funktionseinrichtung an einem Werkzeugmaschinenbereich entlanggeführt ist. Dieser Werkzeugmaschinenbereich wird dann bei der Bewegung der Funktionseinrichtung automatisch gereinigt.

Es kann vorgesehen sein, daß die mindestens eine Reinigungseinrichtung ständig mit der mindestens einen Funktionseinrichtung verbunden ist. Bei der Bewegung der mindestens einen Funktionseinrichtung erfolgt dann ein Reinigungsvorgang.

Insbesondere läßt sich dann ein Reinigungsvorgang mit der mindestens einen Reinigungseinrichtung während eines Werkstückbearbeitungsbetriebs durchführen.

Es kann auch vorgesehen sein, daß die mindestens eine Reinigungseinrichtung eine Austauscheinrichtung ist, welche anstatt eines Werkzeugs oder Werkstücks an der zugeordneten Funktionseinrichtung fixiert ist. In diesem Falle läßt sich über die bewegliche Funktionseinrichtung eine automatisierte Reinigungsbewegung durchführen.

Insbesondere erfolgt dann ein Reinigungsvorgang mit der mindestens einen Reinigungseinrichtung außerhalb des Werkstückbearbeitungsbetriebs.

Es kann vorgesehen sein, daß die mindestens eine Reinigungseinrichtung so ausgebildet ist, daß sie in einen Werkstückhalter oder Werkzeughalter einsetzbar ist. Beispielsweise umfaßt die mindestens eine Reinigungseinrichtung eine Bürste und über einen rotierbaren Werkstückhalter oder rotierbaren Werkzeughalter läßt sich dann eine Reinigungsbewegung durchführen. Beispielsweise wird der Werkstückhalter oder Werkzeughalter in seiner Bewegung so gesteuert, daß gewünschte Werkzeugmaschinenbereiche über die Reinigungseinrichtung reinigbar sind, beispielsweise durch Abbürsten oder Abstreifen.

Insbesondere ist die mindestens eine Reinigungseinrichtung über den Werkstückhalter oder Werkzeughalter angetrieben, um so eine Reinigungsbewegung durchführen zu können.

Beispielsweise ist die mindestens eine Reinigungseinrichtung so ausgebildet, daß sie in einen Werkstückhalter einer Kaltwalzmaschine einsetzbar ist, um Walzstangen zu reinigen. Bei einer Kaltwalzmaschine werden Walzstangen gegenläufig an einem Werkstück verfahren, um dieses durch Kaltverformung zu bearbeiten. Wenn die Walzstangen an einer Reinigungseinrichtung wie beispielsweise einer Bürste verfahren werden, dann lassen sich diese reinigen und insbesondere läßt sich eine Wirkfläche der Walzstangen reinigen. Der "normale" Betriebsmodus der Werkzeugmaschine mit gegenläufiger Walzstangenbewegung läßt sich dann dazu verwenden, diese Walzstangen zu reinigen.

Es kann vorgesehen sein, daß in einem Arbeitsraum eine oder mehrere Blasdüsen angeordnet sind. Die mindestens eine Reinigungseinrichtung, welche insbesondere mit der beweglichen Funktionseinrichtung bewegt wird, kann unter Umständen nicht alle Bereiche der Werkzeugmaschine erreichen. Dadurch besteht die grundsätzliche Gefahr, daß sich beispielsweise Späne in bestimmten Bereichen ansammeln können. Wenn in solchen Bereichen eine oder mehrere Blasdüsen angeordnet sind, dann kann eine Ansammlung in solchen Bereichen verhindert werden. Ein Gasstrom (insbesondere Luftstrom) der mindestens einen Blasdüse ist dabei so ausgerichtet, daß Bearbeitungsrückstände in den kritischen Bereichen angeblasen werden, um deren Ablagerung zu verhindern und dabei vorzugsweise zu einer Abführung geblasen werden.

Insbesondere ist die mindestens eine Blasdüse an oder in der Nähe einer Ecke des Arbeitsraums angeordnet, um so eine Ansammlung von Bearbeitungsrückständen in einer solchen Ecke zu vermeiden.

Der Erfindung liegt ferner die Aufgabe zugrunde, das eingangs genannte Verfahren so zu verbessern, daß dieses auf automatisierte Weise einsetzbar ist.

Diese Aufgabe wird bei dem genannten Verfahren erfindungsgemäß dadurch gelöst, daß die mindestens eine Reinigungseinrichtung so ausgebildet und angeordnet wird, daß durch Bewegung der mindestens einen Funktionseinrichtung ein Reinigungsvorgang durchgeführt wird, wobei die mindestens eine Reinigungseinrichtung an einem Werkstückhalter einer Kaltwalzmaschine positioniert wird und Walzstangen relativ zu der mindestens einen Reinigungseinrichtung verfahren werden, um diese mittels der mindestens einen Reinigungseinrichtung zu reinigen.

Wenn die mindestens eine Reinigungseinrichtung in einem Werkstückhalter einer Kaltwalzmaschine positioniert wird und Walzstangen relativ zur mindestens einen Reinigungseinrichtung verfahren werden, um diese mittels der mindestens einen Reinigungseinrichtung zu reinigen, dann läßt sich dadurch ein automatischer Reinigungsvorgang der Walzstangen durchführen.

Das erfindungsgemäße Verfahren weist die bereits im Zusammenhang mit der erfindungsgemäßen Werkzeugmaschine erläuterten Vorteile auf.

Weitere vorteilhafte Ausgestaltungen wurden ebenfalls bereits im Zusammenhang mit der erfindungsgemäßen Werkzeugmaschine erläutert.

Es kann beispielsweise vorgesehen sein, daß die mindestens eine Reinigungseinrichtung mit der mindestens einen Funktionseinrichtung bewegt wird. Dadurch läßt sich eine automatisierte Reinigungsbewegung durchführen: Wenn die Funktionseinrichtung bewegt wird, dann wird die Reinigungseinrichtung automatisch mitbewegt.

Insbesondere wird dann die mindestens eine Reinigungseinrichtung an einem Werkzeugmaschinenbereich entlanggeführt. Wenn die mindestens eine Reinigungseinrichtung diesen Werkzeugmaschinenbereich beaufschlägt, beispielsweise durch einen Abstreifer oder eine Bürste, dann wird dadurch eine Reinigungsbewegung durchgeführt.

Es ist auch möglich, daß die Funktionseinrichtung relativ zu einer Reinigungseinrichtung bewegt wird, wobei die Reinigungseinrichtung dann insbesondere feststehend ist. Dadurch läßt sich die Funktionseinrichtung in dem von der Reinigungseinrichtung beaufschlagten Bereich als Werkzeugmaschinenbereich reinigen.

Es kann vorgesehen sein, daß die Bewegung der mindestens einen Reinigungseinrichtung über einen Antrieb der mindestens einen Funktionseinrichtung angetrieben wird. Dadurch läßt sich beispielsweise während eines Werkstückbearbeitungsbetriebs ein bestimmter Werkzeugmaschinenbereich oder mehrere bestimmte Werkzeugmaschinenbereiche automatisch reinigen.

Es ist auch möglich, daß die mindestens eine Reinigungseinrichtung und/oder die mindestens eine Funktionseinrichtung manuell bewegt wird. Beispielsweise ist ein Abstreifer oder eine Bürste an einer Schiebetür angeordnet; bei Bewegen der Schiebetüre erfolgt eine Reinigungsbewegung. Diese Bewegung kann beispielsweise zu einer Reinigung eines Werkzeugmaschinenbereichs führen, welcher durch einen Abstreifer an der Schiebetüre beaufschlagt wird und/oder die Schiebetüre reinigen, welche durch einen feststehenden Abstreifer beaufschlagt wird.

Ganz besonders vorteilhaft ist es, wenn die mindestens eine Reinigungseinrichtung so bewegt wird, daß Bearbeitungsrückstände einer Abführung zugeführt werden. Die mindestens eine Reinigungseinrichtung trägt dann mit dazu bei, daß beispielsweise Späneabfall aus einem Arbeitsraum abgeführt wird.

Es ist alternativ oder zusätzlich möglich, daß die mindestens eine Funktionseinrichtung relativ zu der mindestens einen Reinigungseinrichtung bewegt wird. Wenn die Reinigungseinrichtung beispielsweise über einen Abstreifer oder eine Bürste die entsprechende Funktionseinrichtung beaufschlägt, dann läßt sich diese reinigen. Beispielsweise läßt sich durch einen feststehenden Abstreifer, welcher auf eine Schiebetüre wirkt, mindestens ein Teilbereich der Schiebetüre reinigen, wenn diese geöffnet und/oder geschlossen wird.

Die nachfolgende Beschreibung bevorzugter Ausführungsformen dient im Zusammenhang mit der Zeichnung der näheren Erläuterung der Erfindung. Es zeigen:
- Figur 1: eine schematische Darstellung eines Werkzeugmaschinenbereichs mit einem Werkstücktisch, an welchem ein Ausführungsbeispiel einer erfindungsgemäßen Reinigungseinrichtung angeordnet ist;
- Figur 2: eine schematische Schnittansicht eines Arbeitsraums einer Werkzeugmaschine mit einem verfahrbaren Werkstückhalter, an welchem ein Ausführungsbeispiel einer erfindungsgemäßen Reinigungseinrichtung sitzt;
- Figur 3: eine schematische Darstellung eines Ausschnitts eines Arbeitsraums einer Werkzeugmaschine mit einer Blasdüse;
- Figur 4: eine weitere schematische Ansicht eines Werkzeugmaschinenbereichs mit einer Schiebetür, an dem ein weiteres Ausführungsbeispiel einer Reinigungseinrichtung fixiert ist und
- Figur 5: eine schematische Schnittansicht eines Ausführungsbeispiels einer Kaltwalzmaschine mit einem weiteren Ausführungsbeispiel einer Reinigungseinrichtung.

Eine Werkzeugmaschine weist einen Arbeitsraum auf, in dem eine Werkstückbearbeitung erfolgt. Die Werkzeugmaschine weist eine oder mehrere bewegliche Funktionseinrichtungen auf, die die Funktionsfähigkeit der Werkzeugmaschine garantieren.

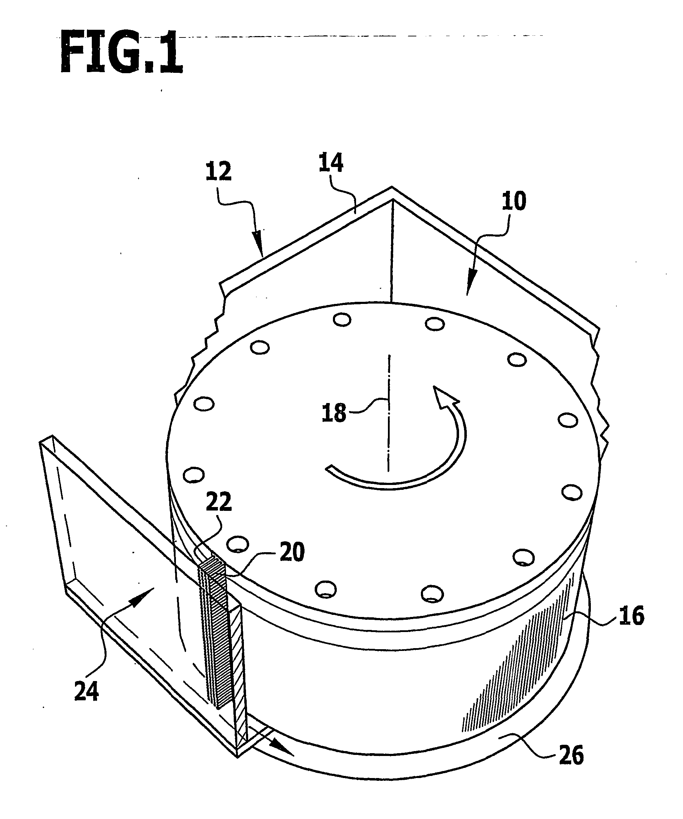

Bei einem in Figur 1 schematisch gezeigten Ausführungsbeispiel ist in einem Arbeitsraum 10, welcher in einem Maschinengehäuse 12 mit Gehäusewänden 14 gebildet ist, ein Rundtisch 16 angeordnet. Dieser ist um eine Achse 18 (B-Achse) drehbar. Der Rundtisch 16 dient als Werkstückhalter oder als Aufnahmeeinrichtung für einen Werkstückhalter.

Ein Beispiel für eine Werkzeugmaschine mit einem Rundtisch als Werkzeughalter ist in der EP 0 614 724 B1 offenbart, auf die ausdrücklich Bezug genommen wird.

Der Rundtisch 16 bildet eine (um die Achse 18) bewegliche Funktionseinrichtung der entsprechenden Werkzeugmaschine. Über den Rundtisch 16 lassen sich Werkstücke in bestimmten Drehstellungen gegenüber einem Bearbeitungswerkzeug, welches an einer Werkzeugspindel fixiert ist, positionieren.

Erfindungsgemäß ist es vorgesehen, daß an dem Rundtisch 16 eine Reinigungseinrichtung 20 sitzt. Die Reinigungseinrichtung umfaßt beispielsweise einen Abstreifer 22 oder eine Bürste. Bei dem In Figur 1 gezeigten Ausführungsbeispiel ist der Abstreifer 22 in seiner Längsrichtung im wesentlichen parallel zu der Achse 18 orientiert.

Die Reinigungseinrichtung 20 bewegt sich mit dem Rundtisch 16, d. h. bei einer Drehung des Rundtisches 16 um die Achse 18 dreht sich die Reinigungseinrichtung 20 ebenfalls um die Achse 18.

Die Reinigungseinrichtung 20 ist so ausgebildet und so bezüglich eines zu reinigenden Werkzeugmaschinenbereichs 24, welcher in dem Arbeitsraum 10 liegt, angeordnet, daß der Abstreifer 22 an dem Werkzeugmaschinenbereich 24 bei der Drehung des Rundtisches 16 entlangfährt. Dadurch werden Bearbeitungsrückstände wie beispielsweise Späne, welche an dem Werkzeugmaschinenbereich 24 anhaften, abgestreift.

Die Reinigungseinrichtung 20 ist vorzugsweise so angeordnet, daß abgestreifte Bearbeitungsrückstände wie Späne einer-Abführung 26 zugeführt werden.

Durch die Reinigungseinrichtung 20 läßt sich während des Werkstückbearbeitungsbetriebs der entsprechenden Werkzeugmaschine der Werkzeugmaschinenbereich 24 permanent reinigen.

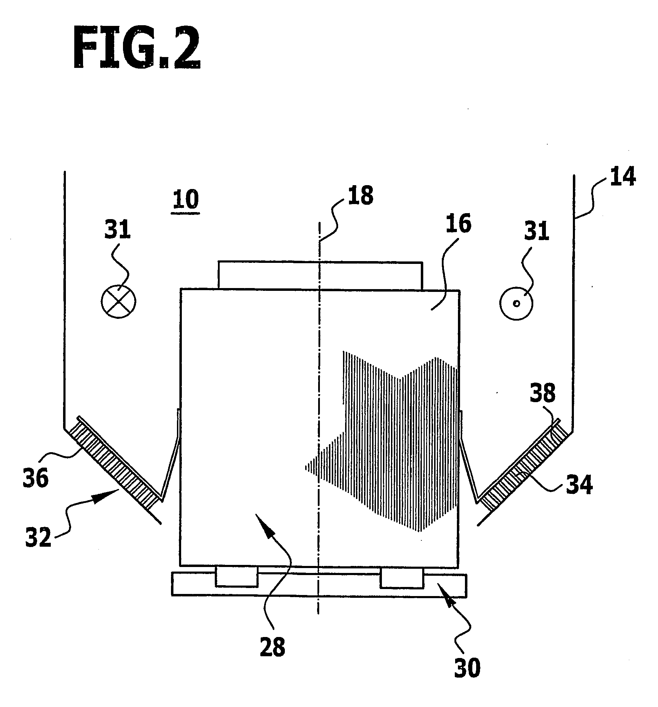

Es ist beispielsweise auch möglich, daß der Rundtisch 16 auf einem in einer Linearrichtung beweglichen Schlitten 28 sitzt bzw. einen Schlitten bildet (Figur 2). Bei der Werkzeugmaschine der EP 0 614 724 B1 ist der Rundtisch in einer Z-Richtung linear geführt. Der Schlitten 28 sitzt dazu an einer Führung 30 (Figur 2). Der Schlitten 28 bildet dann eine eigene bewegliche Funktionseinrichtung der entsprechenden Werkzeugmaschine, über die sich Werkstücke in der entsprechenden Linearrichtung 31 (in Figur 2 senkrecht zur Zeichenebene und angedeutet durch die Pfeilprojektionen) positionieren lassen.

Es ist erfindungsgemäß vorgesehen, daß an dem Schlitten 28 eine Reinigungseinrichtung 32 sitzt, welche beispielsweise eine oder mehrere Bürsten 34 umfaßt.

Bei dem gezeigten Ausführungsbeispiel weist der Arbeitsraum 10 in Richtung auf die Führung 30 zu abgeschrägte Wände 36 auf. Solche schrägen Wände 36 liegen auf beiden Seiten des Schlittens 28. Bearbeitungsrückstände und insbesondere Späne, welche in dem Arbeitsraum 10 auf die Wände 36 fallen, haben die Tendenz, an diesen herunterzurutschen. Unterhalb der Wände 36 ist eine Abführung für Bearbeitungsrückstände vorgesehen.

Die Reinigungseinrichtung 32 mit ihrer mindestens einen Bürste 34 ist so ausgestaltet, daß bei der Bewegung des Schlittens-28- in der Linearrichtung 31 die Bürste 34 bzw. ein Abstreifer an einem in den Arbeitsraum 10 weisenden Bereich der Wände 36 entlangfährt. Dadurch wird die entsprechende Innenseite 38 der entsprechenden Wände 36 (als zu reinigender Werkzeugmaschinenbereich) gereinigt. Das Ansammeln von Bearbeitungsrückständen auf dieser Innenseite 38 wird dadurch verhindert.

Über die Reinigungseinrichtung 20 läßt sich mindestens in Teilbereichen eine Querwand (welche in Figur 2 parallel zur Zeichenebene ist) reinigen.

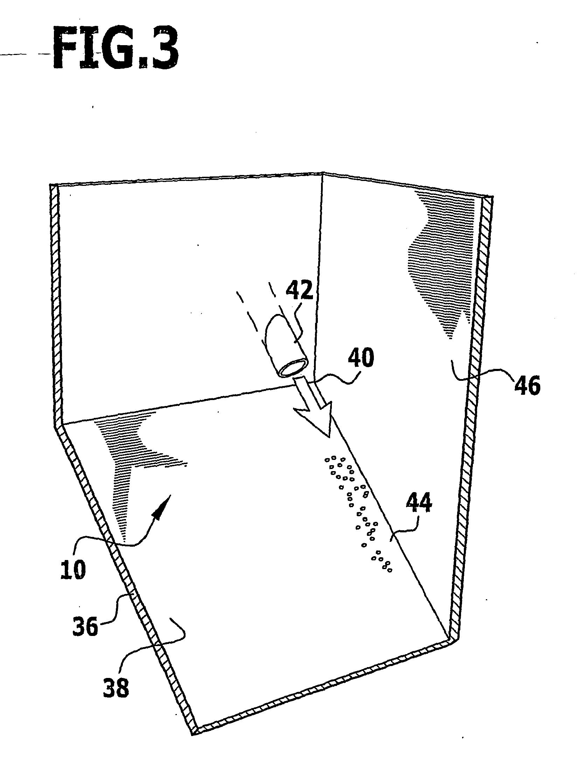

Es ist dann insbesondere günstig, wie in Figur 3 schematisch gezeigt, wenn an oder in der Nähe von Ecken 40 des Arbeitsraums 10 eine oder mehrere Blasdüsen 42 angeordnet sind (Figur 3). Die Blasdüsen 42 sitzen dabei vorzugsweise an der Innenseite 38 der entsprechenden Wände 36 im Bereich von Ecken 40. Beispielsweise ist an allen vier Ecken jeweils mindestens eine solche Blasdüse 42 angeordnet.

Durch die Blasdüsen 42 läßt sich Luft in den Arbeitsraum 10 an den Ecken 40 einblasen. Die Ecken sind durch die Reinigungseinrichtungen 20 und 32 nur schwer zugänglich. Durch die Blasdüse 42 werden Bearbeitungsrückstände und insbesondere Späne aufgeblasen, so daß eine Ansammlung von Spänen im Bereich der Ecken 40 und in einem Übergangsbereich 40 zwischen den schrägen Wänden 36 und vertikalen Wänden 46 verhindert oder zumindest verringert wird. Beispielsweise werden dadurch Späne in einen Bereich der Innenseite 38 geblasen, welcher über die Reinigungseinrichtung 32 zugänglich ist.

-Bei den in den Figuren 1 und 2 gezeigten Ausführungsbeispielen sind die Reinigungseinrichtungen 20 und 32 über den Rundtisch 16 bzw. den Schlitten 28 in ihrer Reinigungsbewegung angetrieben.

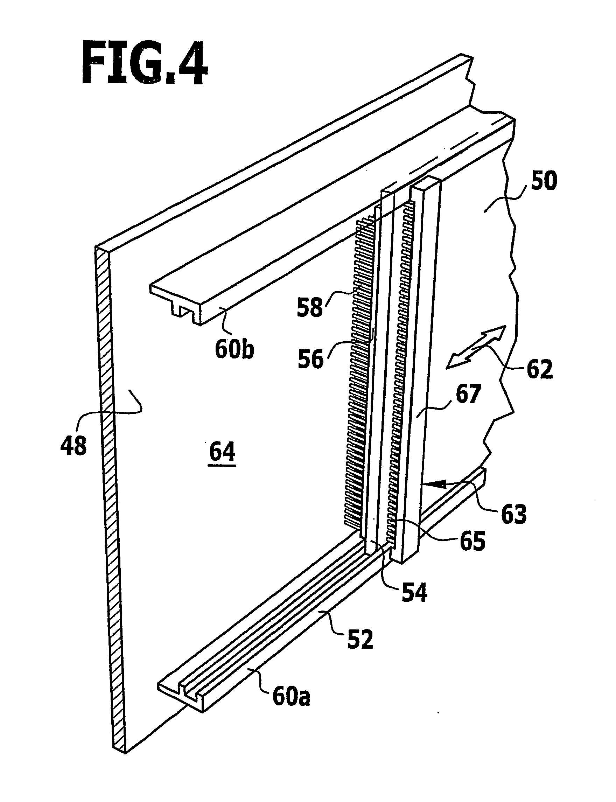

Bei einem weiteren Ausführungsbeispiel, welches in Figur 4 schematisch gezeigt ist, sitzt an einer Maschinengehäusewand 48 linearverschieblich eine Schiebetüre 50. Die Schiebetüre 50 ist in einer Führung 52 geführt. Die Schiebetüre 50 läßt sich manuell öffnen und schließen. Über die Schiebetüre 50 ist der Arbeitsraum 10 von außen her zugänglich. Beispielsweise ist die Schiebetüre 50 eine Werkzeugwechseltüre oder eine Bedienertüre. Die Schiebetüre 50 ist eine Funktionseinrichtung der entsprechenden Werkzeugmaschine.

An der Schiebetüre 50 sitzt an oder in der Nähe eines Endes 54 eine Reinigungseinrichtung 56. Die Reinigungseinrichtung 56 umfaßt beispielsweise einen Abstreifer 58. Dieser Abstreifer ist zwischen Führungsleisten 60a, 60b der Führung 52 in einer Richtung 62 beweglich angeordnet. Bei der Bewegung der Schiebetüre 50 in der Richtung 62 streift dieser Abstreifer 58 an einer dem Arbeitsraum 10 zugewandten Innenseite 64 der Maschinengehäusewand 48 zwischen den Führungsleisten 60a, 60b entlang und reinigt damit diesen Werkzeugmaschinenbereich 48.

Bei dem Öffnen oder Schließen der Schiebetüre 50 wird somit eine automatische Reinigungsbewegung durchgeführt.

Es kann alternativ oder zusätzlich auch eine Reinigungseinrichtung 63 vorgesehen sein, welche-bezüglich der Schiebetüre 50 feststehend ist. Beispielsweise umfaßt diese Reinigungseinrichtung 63 einen Abstreifer 65, welcher zwischen den Führungsleisten 60a und 60b an einer Leiste 67 sitzt. Der Abstreifer 65 ist der Schiebetüre 50 zugewandt und wirkt auf diese, so daß bei der Bewegung der Schiebetüre 50 diese durch den Abstreifer 65 gereinigt wird.

Der durch die Reinigungseinrichtung 63 gereinigte Werkzeugmaschinenbereich ist somit mindestens ein Teilbereich der Schiebetüre 50.

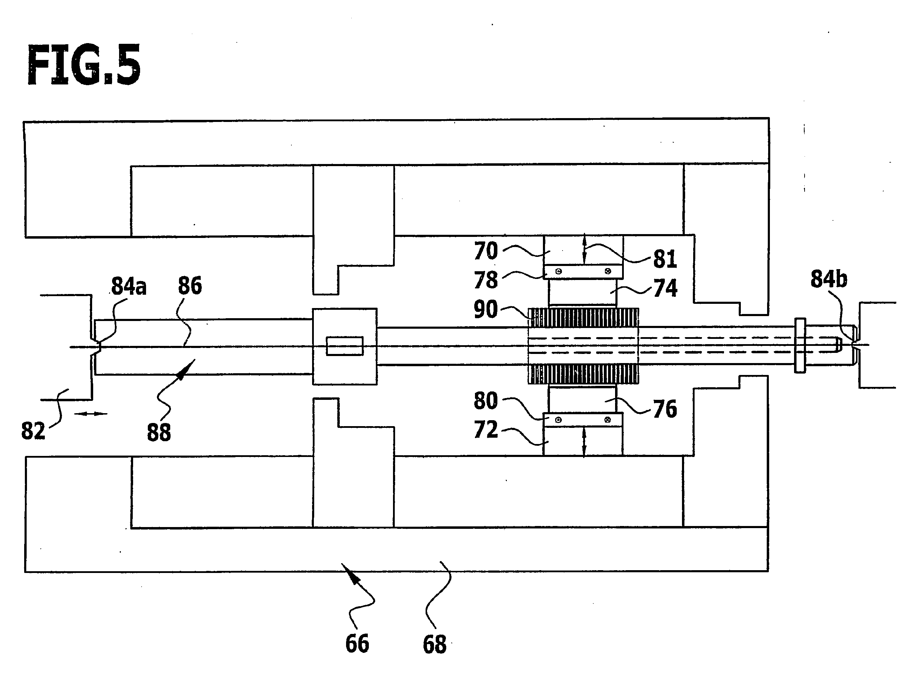

Eine Kaltwalzmaschine, welche in Figur 5 in einer Schnittdarstellung schematisch gezeigt und dort als Ganzes mit 66 bezeichnet ist, umfaßt ein Maschinengestell 68, an weichem ein erster Walzstangenhalter 70 und ein zweiter Walzstangenhalter 72 beweglich geführt sind. An den Walzstangenhaltern 70, 72 sitzen jeweils Walzstangen 74, 76, über die eine Kaltverformungsbearbeitung eines Werkstücks, welches zwischen den Walzstangen 74, 76 angeordnet ist, durchführbar ist.

Die Walzstangenhalter 70, 72 umfassen jeweils Schlitten 78, 80, welche in Gegenrichtung zueinander linearverschieblich sind. Bei der Ansicht gemäß Figur 5 liegt die Linearverschiebungsrichtung senkrecht zur Zeichenebene.

Es kann grundsätzlich auch vorgesehen sein, daß die Schlitten 78, 80 in einer Querrichtung 81 verschieblich sind, um die Walzstangen 74, 76 in dieser Querrichtung 81 einem Werkstück zustellen zu können. Eine entsprechende Kaltwalzmaschine ist in der WO 01/94048 A1 beschrieben, auf die ausdrücklich Bezug genommen wird.

Zum Halten eines Werkstücks zwischen den Walzstangenhaltern 70, 72 ist ein Werkstückhalter 82 vorgesehen, an dem ein Werkstück beispielsweise über Haltedorne 84a, 84b fixierbar ist. Der Werkstückhalter 82 kann drehbar um eine Drehachse 86 ausgebildet sein, so daß ein Werkstück während der Werkstückbearbeitung drehbar ist. Die Drehachse 86 liegt quer und insbesondere senkrecht zu der Richtung 81. Es ist alternativ möglich, daß das Werkstück drehbar am Werkstückhalter 82 gehalten ist.

Erfindungsgemäß ist es vorgesehen, daß eine Reinigungseinrichtung 88 in dem Werkstückhalter 82 (anstatt eines Werkstücks) sitzt. Die Reinigungseinrichtung 88 weist eine Bürste 90 auf, welche im Bereich der Walzstangen 74, 76 sitzt. Die Reinigungseinrichtung 88 ist vorzugsweise drehbar in dem Werkstückhalter 82 angeordnet.

Es ist möglich, daß die Reinigungseinrichtung 88 nicht angetrieben drehbar in dem Werkstückhalter 82 sitzt oder über den Werkstückhalter 82 in einer Drehbewegung angetrieben ist.

Zur Reinigung der Walzstangen 74 werden diese in der Richtung 81 auf die Bürste 90 verfahren und dann beispielsweise gegenläufig zueinander bewegt (bei der Zeichnung gemäß Figur 5 senkrecht zur Zeichenebene). Dadurch fahren entsprechende Wirkflächen der Walzstangen 74, 76 an der Bürste 90 entlang und werden über die Bürste 90 gereinigt.

Bei dem Beispiel gemäß Figur 5 ist der Werkstückhalter 82 eine bewegliche Funktionseinrichtung, an welcher die Reinigungseinrichtung 88 fixiert ist.

Auch die Walzstangenhalter 70, 72 stellen-eine bewegliche Funktionseinrichtung dar.

Erfindungsgemäß wird ein Werkzeugmaschinenbereich dadurch gereinigt, daß mindestens eine bewegliche Funktionseinrichtung so ausgebildet und angeordnet wird, daß durch Bewegung der Funktionseinrichtung eine Reinigungsbewegung durchgeführt wird.

Die Reinigungseinrichtung kann direkt mit der Funktionseinrichtung bewegt werden und/oder die Funktionseinrichtung bewegt sich relativ zur Reinigungseinrichtung.

Je nach Anordnung und Ausbildung der Reinigungseinrichtung ist es möglich, daß bei ständigem Werkstückbearbeitungsbetrieb ein Reinigungsvorgang durchgeführt wird (wie bei dem Rundtisch 16 gemäß Figur 1 und dem Schlitten 28 gemäß Figur 2) oder daß außerhalb des Werkstückbearbeitungsbetriebs der entsprechenden Werkzeugmaschine ein Reinigungsvorgang durchgeführt wird (wie beim Beispiel der Schiebetür 50 gemäß Figur 4 und beim Beispiel der Kaltwalzmaschine 66 gemäß Figur 5).

## Patentansprüche

1. Kaltwalzmaschine mit einem ersten Walzstangenhalter (70), einem zweiten Walzstangenhalter (72) und einem zwischen den Walzstangenhaltern (70, 72) angeordneten Werkstückhalter (82), **dadurch gekennzeichnet, daß** in dem Werkstückhalter (82) mindestens eine Reinigungseinrichtung (88) sitzt, wobei Walzstangen (74, 76) über die Walzstangenhalter (70, 72) relativ zu der mindestens einen Reinigungseinrichtung (88) zur Reinigung der Walzstangen (74, 76) verfahrbar sind.

2. Kaltwalzmaschine nach Anspruch 1, **dadurch gekennzeichnet, daß** die mindestens eine Reinigungseinrichtung (88) drehbar angeordnet ist.

3. Kaltwalzmaschine nach Anspruch 1 oder 2, welche mindestens eine bewegliche Funktionseinrichtung (16; 28; 50; 70, 72; 82) aufweist, wobei mindestens eine Reinigungseinrichtung (20; 32; 56; 63; 88) vorgesehen ist, welche so angeordnet und ausgebildet ist, daß mit einer Bewegung der mindestens einen Funktionseinrichtung (16; 28; 50; 70, 72; 82) ein Reinigungsvorgang durchführbar ist.

4. Kaltwalzmaschine nach Anspruch 3, **dadurch gekennzeichnet, daß** die mindestens eine Reinigungseinrichtung (20; 32; 56; 63; 88) in Relation zu der mindestens einen Funktionseinrichtung (16; 28; 50; 70, 72; 82) so angeordnet und ausgebildet ist, daß durch die Bewegung der mindestens einen Funktionseinrichtung (16; 28; 50; 70, 72; 82) Bearbeitungsrückstände einer Abführung (26) zuführbar sind.

5. Kaltwalzmaschine nach Anspruch 3 oder 4, **dadurch gekennzeichnet, daß** die mindestens eine Reinigungseinrichtung (20; 32; 56; 63; 88) einen Abstreifer (22; 58; 65) und/oder eine Bürste (34; 90) aufweist.

6. Kalzwalzmaschine nach einem der Ansprüche 3 bis 5, **dadurch gekennzeichnet, daß** die mindestens eine Funktionseinrichtung (28; 50; 70, 72) in mindestens einer Linearrichtung (31; 62) beweglich ist.

7. Kaltwalzmaschine nach einem der Ansprüche 3 bis 6, **dadurch gekennzeichnet, daß** die mindestens eine Funktionseinrichtung um mindestens eine Achse (18; 86) schwenkbar oder drehbar ist.

8. Kaltwalzmaschine nach einem der Ansprüche 3 bis 7, **dadurch gekennzeichnet, daß** der mindestens einen Funktionseinrichtung (16; 28; 70, 72; 82) ein Antrieb zu deren Bewegung zugeordnet ist.

9. Kaltwalzmaschine nach einem der Ansprüche 3 bis 7, **dadurch gekennzeichnet, daß** die mindestens eine Funktionseinrichtung (50) manuell beweglich ist.

10. Kaltwalzmaschine nach einem der Ansprüche 3 bis 9, **dadurch gekennzeichnet, daß** die mindestens eine Funktionseinrichtung (16; 28; 82) ein Werkstückhalter oder ein Werkzeughalter ist.

11. Kaltwalzmaschine nach einem der Ansprüche 3 bis 10, **dadurch gekennzeichnet, daß** die mindestens eine Funktionseinrichtung (50) eine Tür ist.

12. Kaltwalzmaschine nach Anspruch 11, **dadurch gekennzeichnet, daß** die Tür (50) an einem Maschinengehäuse angeordnet ist.

13. Kaltwalzmaschine nach Anspruch 11 oder 12, **dadurch gekennzeichnet, daß** die Tür (50) verschieblich geführt ist.

14. Kaltwalzmaschine nach einem der Ansprüche 11 bis 13, **dadurch gekennzeichnet, daß** die mindestens eine Reinigungseinrichtung (56) so an der Tür (50) angeordnet ist, daß bei Bewegung der Tür (50) die mindestens eine Reinigungseinrichtung (56) an einem zu reinigenden Werkzeugmaschinenbereich entlanggeführt ist.

15. Kaltwalzmaschine nach einem der Ansprüche 11 bis 14, **dadurch gekennzeichnet, daß** die mindestens eine Reinigungseinrichtung (63) so bezüglich der Tür (50) angeordnet ist, daß bei Bewegung der Tür (50) die Tür an der mindestens einen Reinigungseinrichtung (63) entlanggeführt ist.

16. Kaltwalzmaschine nach einem der Ansprüche 3 bis 15, **dadurch gekennzeichnet, daß** die mindestens eine Reinigungseinrichtung (20; 32; 56; 63; 88) in einem Arbeitsraum (10) der Werkzeugmaschine positioniert ist.

17. Kaltwalzmaschine nach einem der Ansprüche 3 bis 16, **dadurch gekennzeichnet, daß** die mindestens eine Reinigungseinrichtung (20; 32; 56; 88) an der mindestens einen Funktionseinrichtung (16; 28; 50; 82) sitzt und mit dieser beweglich ist.

18. Kaltwalzmaschine nach Anspruch 17, **dadurch gekennzeichnet, daß** die mindestens eine Reinigungseinrichtung (20; 32; 56) so angeordnet und ausgebildet ist, daß sie bei der Bewegung der zugeordneten mindestens einen Funktionseinrichtung (16; 28; 50) an einem Werkzeugmaschinenbereich entlanggeführt ist.

19. Kaltwalzmaschine nach einem der Ansprüche 3 bis 18, **dadurch gekennzeichnet, daß** die mindestens eine Reinigungseinrichtung (20; 32; 56) ständig mit der mindestens einen Funktionseinrichtung (16; 28; 50) verbunden ist.

20. Kaltwalzmaschine nach einem der Ansprüche 3 bis 19, **dadurch gekennzeichnet, daß** ein Reinigungsvorgang mit der mindestens einen Reinigungseinrichtung (20; 32; 56) während eines Werkstückbearbeitungsbetriebs durchgeführt ist.

21. Kaltwalzmaschine nach einem der Ansprüche 3 bis 20, **dadurch gekennzeichnet, daß** die mindestens eine Reinigungseinrichtung (88) eine Austauscheinrichtung ist, welche anstatt eines Werkzeugs oder Werkstücks an der zugeordneten Funktionseinrichtung (82) fixiert ist.

22. Kaltwalzmaschine nach einem der Ansprüche 3 bis 21, **dadurch gekennzeichnet, daß** ein Reinigungsvorgang mit der mindestens einen Reinigungseinrichtung (63; 88) außerhalb des Werkstückbearbeitungsbetriebs durchgeführt ist.

23. Kaltwalzmaschine nach einem der Ansprüche 3 bis 22, **dadurch gekennzeichnet, daß** die mindestens eine Reinigungseinrichtung (88) so ausgebildet ist, daß sie in einen Werkstückhalter (82) oder Werkzeughalter einsetzbar ist.

24. Kaltwalzmaschine nach Anspruch 23, **dadurch gekennzeichnet, daß** die mindestens eine Reinigungseinrichtung (88) über den Werkstückhalter (82) oder Werkzeughalter angetrieben ist.

25. Kaltwalzmaschine nach einem der Ansprüche 3 bis 24, **dadurch gekennzeichnet, daß** in einem Arbeitsraum (10) eine oder mehrere Blasdüsen (42) angeordnet sind.

26. Kaltwalzmaschine nach Anspruch 25, **dadurch gekennzeichnet, daß** die mindestens eine Blasdüse (42) an oder in der Nähe einer Ecke (40) des Arbeitsraums (10) angeordnet ist.

27. Verfahren zur Reinigung von Werkzeugmaschinenbereichen einer Werkzeugmaschine mit mindestens einer beweglichen Funktionseinrichtung bei der mindestens eine Reinigungseinrichtung (88) so ausgebildet und angeordnet wird, daß durch Bewegung der mindestens einen Funktionseinrichtung ein Reinigungsvorgang durchgeführt wird, wobei die mindestens eine Reinigungseinrichtung (88) an einem Werkstückhalter (82) einer Kaltwalzmaschine positioniert wird und Walzstangen (74, 76) relativ zu der mindestens einen Reinigungseinrichtung (88) verfahren werden, um diese mittels der mindestens einen Reinigungseinrichtung (88) zu reinigen.

28. Verfahren nach Anspruch 27, **dadurch gekennzeichnet, daß** die mindestens eine Reinigungseinrichtung (88) mit der mindestens einen Funktionseinrichtung bewegt wird.

29. Verfahren nach Anspruch 27 oder 28, **dadurch gekennzeichnet, daß** die mindestens eine Reinigungseinrichtung (88) an einem Werkzeugmaschinenbereich entlanggeführt wird.

30. Verfahren nach Anspruch 28 oder 29, **dadurch gekennzeichnet, daß** die Bewegung der mindestens einen Reinigungseinrichtung (88) über einen Antrieb der mindestens einen Funktionseinrichtung angetrieben wird.

31. Verfahren nach einem der Ansprüche 27 bis 30, **dadurch gekennzeichnet, daß** die mindestens eine Reinigungseinrichtung (88) und/oder die zugeordnete mindestens eine Funktionseinrichtung manuell bewegt wird.

32. Verfahren nach einem der Ansprüche 27 bis 31, **dadurch gekennzeichnet, daß** die mindestens eine Reinigungseinrichtung (88) so bewegt wird, daß Bearbeitungsrückstände einer Abführung zugeführt werden.

33. Verfahren nach einem der Ansprüche 27 bis 32, **dadurch gekennzeichnet, daß** die mindestens eine Funktionseinrichtung relativ zu der mindestens einen Reinigungseinrichtung (88) bewegt wird.

## Claims

1. Cold rolling machine with a first rolling rod holder (70), a second rolling rod holder (72) and a workpiece holder (82) arranged between the rolling rod holders (70, 72), **characterised in that** at least one cleaning device (88) sits in the workpiece holder (82), wherein rolling rods (74, 76) are movable by means of the rolling rod holders (70, 72) relative to the at least one cleaning device (88) for cleaning the rolling rods (74, 76).

2. Cold rolling machine according to claim 1, **characterised in that** the at least one cleaning device (88) is rotatably arranged.

3. Cold rolling machine according to claim 1 or 2, which has at least one movable operating device (16; 28; 50; 70, 72; 82), wherein at least one cleaning device (20; 32; 56; 63; 88) is provided, which is arranged and configured such that a cleaning process can be conducted with a movement of the at least one operating device (16; 28; 50; 70, 72; 82).

4. Cold rolling machine according to claim 3, **characterised in that** the at least one cleaning device (20; 32; 56; 63; 88) is arranged and configured in relation to the at least one operating device (16; 28; 50; 70, 72; 82) such that machining residues can be fed to a discharge means (26) by the movement of the at least one operating device (16; 28; 50; 70, 72; 82).

5. Cold rolling machine according to claim 3 or 4, **characterised in that** the at least one cleaning device (20; 32; 56; 63; 88) has a wiper (22; 58; 65) and/or a brush (34; 90).

6. Cold rolling machine according to one of claims 3 to 5, **characterised in that** the at least one operating device (28; 50; 70, 72) is movable in at least one linear direction (31; 62).

7. Cold rolling machine according to one of claims 3 to 6, **characterised in that** the at least one operating device can be pivoted or rotated around at least one axis (18; 86).

8. Cold rolling machine according to one of claims 3 to 7, **characterised in that** the at least one operating device (16; 28; 70, 72; 82) has an associated drive to move it.

9. Cold rolling machine according to one of claims 3 to 7, **characterised in that** the at least one operating device (50) is movable manually.

10. Cold rolling machine according to one of claims 3 to 9, **characterised in that** the at least one operating device (16; 28; 82) is a workpiece holder or a tool holder.

11. Cold rolling machine according to one of claims 3 to 10, **characterised in that** the at least one operating device (50) is a door.

12. Cold rolling machine according to claim 11, **characterised in that** the door (50) is arranged on a machine housing.

13. Cold rolling machine according to claim 11 or 12, **characterised in that** the door (50) is displaceably guided.

14. Cold rolling machine according to one of claims 11 to 13, **characterised in that** the at least one cleaning device (56) is arranged on the door (50) such that upon movement of the door (50) the at least one cleaning device (56) is guided along a machine tool area to be cleaned.

15. Cold rolling machine according to one of claims 11 to 14, **characterised in that** the at least one cleaning device (63) is arranged relative to the door (50) in such a way that upon movement of the door (50) the door is guided along the at least one cleaning device (63).

16. Cold rolling machine according to one of claims 3 to 15, **characterised in that** the at least one cleaning device (20; 32; 56; 63; 88) is positioned in a working area (10) of the machine tool.

17. Cold rolling machine according to one of claims 3 to 16, **characterised in that** the at least one cleaning device (20; 32; 56; 88) sits on the at least one operating device (16; 28; 50; 82) and is movable with this.

18. Cold rolling machine according to claim 17, **characterised in that** the at least one cleaning device (20; 32; 56) is arranged and configured such that it is guided along a machine tool area upon movement of the associated at least one operating device (16; 28; 50).

19. Cold rolling machine according to one of claims 3 to 18, **characterised in that** the at least one cleaning device (20; 32; 56) is permanently connected to the at least one operating device (16; 28; 50).

20. Cold rolling machine according to one of claims 3 to 19, **characterised in that** a cleaning process with the at least one cleaning device (20; 32; 56) is conducted during a workpiece machining operation.

21. Cold rolling machine according to one of claims 3 to 20, **characterised in that** the at least one cleaning device (88) is a substitution device, which is secured to the associated operating device (82) instead of a tool or workpiece.

22. Cold rolling machine according to one of claims 3 to 21, **characterised in that** a cleaning process is conducted with the at least one cleaning device (63; 88) outside the workpiece machining operation.

23. Cold rolling machine according to one of claims 3 to 22, **characterised in that** the at least one cleaning device (88) is configured such that it can be inserted into a workpiece holder (82) or tool holder.

24. Cold rolling machine according to claim 23, **characterised in that** the at least one cleaning device (88) is driven by means of the workpiece holder (82) or tool holder.

25. Cold rolling machine according to one of claims 3 to 24, **characterised in that** one or more blast nozzles (42) are arranged in a working area (10).

26. Cold rolling machine according to claim 25, **characterised in that** the at least one blast nozzle (42) is arranged at or in the vicinity of a corner (40) of the working area (10).

27. Process for cleaning machine tool areas of a machine tool with at least one movable operating device, in which at least one cleaning device (88) is configured and arranged such that a cleaning process is conducted by movement of the at least one operating device, wherein the at least one cleaning device (88) is positioned on a workpiece holder (82) of a cold rolling machine and rolling rods (74, 76) are moved relative to the at least one cleaning device (88) in order to clean these by means of the at least one cleaning device (88).

28. Process according to claim 27, **characterised in that** the at least one cleaning device (88) is moved with the at least one operating device.

29. Process according to claim 27 or 28, **characterised in that** the at least one cleaning device (88) is guided along a machine tool area.

30. Process according to claim 28 or 29, **characterised in that** the movement of the at least one cleaning device (88) is driven by means of a drive of the at least one operating device.

31. Process according to claims 27 to 30, **characterised in that** the at least one cleaning device (88) and/or the associated at least one operating device is/are moved manually.

32. Process according to one of claims 27 to 31, **characterised in that** the at least one cleaning device (88) is moved such that machining residues are fed to a discharge means.

33. Process according to one of claims 27 to 32, **characterised in that** the at least one operating device is moved relative to the at least one cleaning device (88).

## Revendications

1. Machine de laminage à froid avec un premier support de barre de laminage (70), un second support de barre de laminage (72) et un support de pièces (82) disposé entre les supports de barre de laminage (70, 72), **caractérisée en ce que** dans le support de pièces (82) repose au moins un dispositif de nettoyage (88), des barres de laminage (74, 76) pouvant se déplacer par rapport à au moins un dispositif de nettoyage (88) pour le nettoyage des barres de laminage (74, 76).

2. Machine de laminage à froid selon la revendication 1, **caractérisée en ce qu'**au moins un dispositif de nettoyage (88) est placé de manière rotative.

3. Machine de laminage à froid selon la revendication 1 ou 2, laquelle présente au moins un dispositif mobile de fonctionnement (16 ; 28 ; 50 ; 70, 72 ; 82), au moins un dispositif de nettoyage (20 ; 32 ; 56 ; 63 ; 88) étant prévu, lequel est conçu et placé de façon à ce qu'un processus de nettoyage puisse être exécuté avec un mouvement d'au moins un dispositif de fonctionnement (16 ; 28 ; 50 ; 70, 72 ; 82).

4. Machine de laminage à froid selon la revendication 3, **caractérisée en ce qu'**au moins le dispositif de nettoyage (20 ; 32 ; 56 ; 63 ; 88) est conçu et placé en relation avec au moins le dispositif de fonctionnement (16 ; 28 ; 50 ; 70, 72 ; 82) de façon à ce que, grâce au mouvement d'au moins un dispositif de fonctionnement (16 ; 28 ; 50 ; 70, 72 ; 82), des restes d'usinage d'une sortie (26) puissent être entrés.

5. Machine de laminage à froid selon la revendication 3 ou 4, **caractérisée en ce qu'**au moins le dispositif de nettoyage (20 ; 32 ; 56 ; 63 ; 88) présente un racloir (22 ; 58 ; 65) et/ou une brosse (34, 90).

6. Machine de laminage à froid selon l'une quelconque des revendications 3 à 5, **caractérisée en ce qu'**au moins un dispositif de fonctionnement (28 ; 50 ; 70, 72) est mobile dans au moins une direction linéaire (31 ; 62).

7. Machine de laminage à froid selon l'une quelconque des revendications 3 à 6, **caractérisée en ce qu'**au moins un dispositif de fonctionnement peut pivoter ou tourner autour d'au moins un axe (18 ; 86).

8. Machine de laminage à froid selon l'une quelconque des revendications 3 à 7, **caractérisée en ce qu'**un entraînement est affecté à au moins un dispositif de fonctionnement (16 ; 28 ; 70, 72 ; 82) pour son déplacement.

9. Machine de laminage à froid selon l'une quelconque des revendications 3 à 7, **caractérisée en ce qu'**au moins le dispositif de fonctionnement (50) peut être déplacé manuellement.

10. Machine de laminage à froid selon l'une quelconque des revendications 3 à 9, **caractérisée en ce qu'**au moins un dispositif de fonctionnement (16 ; 28; 82) est un support de pièces ou un support d'outils.

11. Machine de laminage à froid selon l'une quelconque des revendications 3 à 10, **caractérisée en ce qu'**au moins un dispositif de fonctionnement (50) est une porte.

12. Machine de laminage à froid selon la revendication 11, **caractérisée en ce que** la porte (50) est placée sur un bâti de machine.

13. Machine de laminage à froid selon la revendication 11 ou 12, **caractérisée en ce que** la porte (50) peut coulisser.

14. Machine de laminage à froid selon la revendication 11 ou 13, **caractérisée en ce qu'**au moins le dispositif de nettoyage (56) est disposé sur la porte (50) de façon à ce que, lors du mouvement de la porte (50), au moins un dispositif de nettoyage (56) coulisse le long d'une zone à nettoyer de la machine-outil.

15. Machine de laminage à froid selon l'une quelconque des revendications 11 à 14, **caractérisée en ce qu'**au moins un dispositif de nettoyage (63) est placé d'une telle façon par rapport à la porte (50) que, lors du mouvement de la porte (50), la porte coulisse le long d'au moins un dispositif de nettoyage (63).

16. Machine de laminage à froid selon l'une quelconque des revendications 3 à 15, **caractérisée en ce qu'**au moins un dispositif de nettoyage (20 ; 32 ; 56 ; 63 ; 88) est positionné dans un espace de travail (10) de la machine-outil.

17. Machine de laminage à froid selon l'une quelconque des revendications 3 à 16, **caractérisée en ce qu'**au moins un dispositif de nettoyage (20 ; 32 ; 56 ; 88) repose sur au moins un dispositif de fonctionnement (16 ; 28 ; 50 ; 82) et se déplace avec celui-ci.

18. Machine de laminage à froid selon la revendication 17, **caractérisée en ce qu'**au moins un dispositif de nettoyage (20 ; 32 ; 56) est conçu et placé de façon à ce qu'il coulisse, lors du mouvement d'au moins un dispositif de fonctionnement affecté (16 ; 28 ; 50) le long d'une zone de la machine-outil.

19. Machine de laminage à froid selon l'une quelconque des revendications 3 à 18, **caractérisée en ce qu'**au moins un dispositif de nettoyage (20; 32 ; 56) est relié continuellement à au moins un dispositif de fonctionnement (16 ; 28 ; 50).

20. Machine de laminage à froid selon l'une quelconque des revendications 3 à 19, **caractérisée en ce qu'**un processus de nettoyage est exécuté avec au moins un dispositif de nettoyage (20 ; 32 ; 56) pendant un procédé d'usinage de pièces.

21. Machine de laminage à froid selon l'une quelconque des revendications 3 à 20, **caractérisée en ce qu'**au moins un dispositif de nettoyage (88) est un dispositif de remplacement, lequel est fixé, au lieu d'un outil ou d'une pièce, sur le dispositif de fonctionnement affecté (82).

22. Machine de laminage à froid selon l'une quelconque des revendications 3 à 21, **caractérisée en ce qu'**un processus de nettoyage avec au moins un dispositif de nettoyage (63 ; 88) est exécuté en dehors du procédé d'usinage de pièces.

23. Machine de laminage à froid selon l'une quelconque des revendications 3 à 22, **caractérisée en ce qu'**au moins un dispositif de nettoyage (88) est conçu de façon à ce qu'il puisse être inséré dans un support de pièces (82) ou un support d'outils.

24. Machine de laminage à froid selon la revendication 23, **caractérisée en ce qu'**au moins un dispositif de nettoyage (88) est entraîné par l'intermédiaire du support de pièces (82) ou du support d'outils.

25. Machine de laminage à froid selon l'une quelconque des revendications 3 à 24, **caractérisée en ce que** sont disposées dans un espace de travail (10) une ou plusieurs buses (82).

26. Machine de laminage à froid selon la revendication 25, **caractérisée en ce qu'**au moins une buse (42) est disposée sur ou à proximité d'un angle (40) de l'espace de travail (10).

27. Procédé de nettoyage de zones de machines-outils d'une machine-outil avec au moins un dispositif mobile de fonctionnement, sur lequel est placé et conçu au moins un dispositif de nettoyage de façon à ce que, grâce au mouvement d'au moins un dispositif de fonctionnement, soit entrepris un processus de nettoyage, au moins un dispositif de nettoyage (88) étant positionné sur un support de pièces (82) d'une machine de laminage à froid et des barres de laminage (74, 78) se déplaçant par rapport à au moins un dispositif de nettoyage, afin de nettoyer celles-ci au moyen d'au moins un dispositif de nettoyage (88).

28. Procédé selon la revendication 27, **caractérisé en ce qu'**au moins un dispositif de nettoyage (88) se déplace avec au moins un dispositif de fonctionnement.

29. Procédé selon la revendication 27 ou 28, **caractérisé en ce qu'**au moins un dispositif de nettoyage (88) coulisse le long d'une zone de machine-outil.

30. Procédé selon la revendication 28 ou 29, **caractérisé en ce que** le mouvement d'au moins un dispositif de nettoyage (88) est entraîné par l'intermédiaire d'un entraînement d'au moins un dispositif de fonctionnement.

31. Procédé selon l'une quelconque des revendications 27 à 30, **caractérisé en ce qu'**au moins un dispositif de nettoyage et/ou au moins un dispositif de fonctionnement affecté peut être déplacé manuellement.

32. Procédé selon l'une quelconque des revendications 27 à 31, **caractérisé en ce qu'**au moins un dispositif de nettoyage (88) se déplace de façon à ce que des restes d'usinage d'une sortie soient entrés.

33. Procédé selon l'une quelconque des revendications 27 à 32, **caractérisé en ce qu'**au moins un dispositif de fonctionnement se déplace par rapport à au moins un dispositif de nettoyage (88).
